# EUROPÄISCHE PATENTANMELDUNG

(11) **EP 1 197 542 A2**
(43) Veröffentlichungstag der Anmeldung: **17.04.2002**
(21) Anmeldenummer: 01122849.1
(22) Anmeldetag: 24.09.2001
(51) Int. Cl.: C09K 5/10, A23L 3/375, A23B 4/09

(54) **Kühlflüssigkeit**

(30) Priorität: 13.10.2000 DE 10050916
(71) Anmelder: CFS GmbH Kempten, 87437 Kempten (DE)
(72) Erfinder: Marton, Andre, 87439 Kempten (DE)
(74) Vertreter: Pfister, Helmut, Dipl.-Ing.

(57) **Zusammenfassung**

Die Erfindung betrifft die Verwendung von gekühltem Alkohol als Kühlflüssigkeit. Dieser wird Salz der Alkalimetalle, Berylliumgruppe oder Erdalkalimetalle, insbesondere Kochsalz, beigemischt.

## Beschreibung

Die Erfindung betrifft eine Kühlflüssigkeit bestehend aus Alkohol beziehungsweise die Verwendung von gekühltem Alkohol, insbesondere von Branntwein, beziehungsweise Ethanol, Alkane, Essigsäureester, insbesondere Butylacetat, Ethylacetat oder Aceton, beziehungsweise eine Mischung hiervon als Kühlflüssigkeit zum Gefrieren oder oberflächigen Gefrieren von Lebensmitteln wie Wurst- oder Käseriegeln.

In der internationalen Patentanmeldung WO 99/21429 wird ein Verfahren und System zum Gefrieren von Schlachtgut beschrieben. Hierbei wird das Schlachtgut in ein Kühlmedium, welches als Schlammeis oder als Salzsole ausgebildet ist mit einer Temperatur unter 0° C eingebracht. Ziel dieser Schrift ist es, dem Schlachtgut ein gewisses Maß an Wärmeenergie zu entziehen, das Schlachtgut soll vorgekühlt werden.

In der europäischen Patentschrift 0 290 666 wurde ein Verfahren zum Tieffrieren von Nahrungsmitteln beschrieben, bei welchen mit Hilfe einer Tiefkühllösung auf Ethanolbasis das Nahrungsmittel abgekühlt werden.

In der deutschen Patentanmeldung 198 60 442 der Rechtsvorgängerin der Anmelderin wurde die Verwendung von Alkohol als Kühlflüssigkeit von Lebensmitteln bereits beschrieben. Auf diese Anmeldung wird an dieser Stelle vollinhaltlich Bezug genommen. Im Gegensatz zu der ansonsten bekannten Verwendung von flüssigen Kohlendioxyd oder Stickstoff zur Abkühlung von Lebensmitteln, bietet die Verwendung von gekühltem Alkohol eine deutlich kostengünstigere Variante.

Um zu vermeiden, daß der Alkohol aus Versehen konsumiert wird, ist im Stand der Technik beschrieben worden, daß der Kühlflüssigkeit ein lebensmittelverträgliches Vergällungsmittel, insbesondere Milchsäure und/oder Essigsäure, zugesetzt ist.

Die Erfindung hat es sich zur Aufgabe gemacht, die Verwendung des gekühlten Alkohols als Kühlflüssigkeit weiterzuentwickeln, um diese einem anderen gegebenenfalls auch kostengünstigeren Vergällungsmittel beizumengen.

Zur Lösung dieser Aufgabe geht die Erfindung aus von der Verwendung von Alkohol beziehungsweise einer Kühlflüssigkeit wie eingangs beschrieben und schlägt vor, daß dem Alkohol beziehungsweise der Kühlflüssigkeit ein Salz der Alkalimetalle, Berylliumgruppe oder Erdalkalimetalle, insbesondere Kochsalz, zugesetzt wird.

Gerade die Verwendung von anorganischen Salzen, die auf den Elementen der Alkali- beziehungsweise Erdalkalimetalle basiert, bietet eine kostengünstige Möglichkeit, ein Vergällungsmittel für Ethanol beziehungsweise Alkohol zur Vergügung zu stellen. Gleichzeitig ist das Kochsalz bezüglich des Einsatzes bei Lebensmitteln unbedenklich, da der Einsatz von Kochsalz als Pökelmittel zur Konservierung bei Lebensmitteln hinlänglich bekannt ist beziehungsweise Salz auch bei der Gestaltung des Geschmackes des Produktes eingesetzt wird. Gleiches gilt aber auch für die anderen, aus den vorgenannten chemischen Gruppen ableitbaren Salzen.

Es werden durch die Kombination von Kochsalz (NaCl) mit Ethanol vorteilhafte Eigenschaften der Stoffe miteinander kombiniert. Auf die desinfizierende Wirkung von Alkohol ist insbesondere in der vorgenannten Druckschrift ausführlich eingegangen worden. Die desinfizierende Wirkung von Alkohol wird nun mit dem geschmacksneutralen, beziehungsweise bei der Produktion entsprechend zu berücksichtigenden Salzgeschmack kombiniert und die konservierende Wirkung des Salzes ausgenützt. Dabei handelt es sich bei Kochsalz um ein natürlich vorkommendes Salz, dessen Gewinnung inzwischen sehr kostengünstig und umweltverträglich ist. Gleichzeitig kann durch eine entsprechende Konzentration an Kochsalz beziehungsweise den vorgenannten Salzen im Alkohol beziehungsweise in der Kühlflüssigkeit sichergestellt werden, daß der Alkohol nicht aus Versehen konsumiert wird. Dabei ist zu beachten, daß insbesondere der Branntwein oder das Ethanol in hoher Konzentration zu gesundheitlichen Beeinträchtigungen führen kann.

Es ist dabei gefunden worden, daß bereits geringe Konzentrationen von Salz in der Kühlflüssigkeit einen genußvollen Konsum der Kühlflüssigkeit unterbinden. Insbesondere bei Kochsalz ist gefunden worden, daß ca. 3 % Anteil (bezogen auf das Gewicht) an der Gesamtkühlflüssigkeit ausreichen. Je nach Intensität des Geschmackes von anderen Salzen kann aber auch eine höhere beziehungsweise niedrigere Konzentration erforderlich sein, weshalb sich ein Intervall von ca. 0,5 % bis 10,0 % (jeweils bezogen auf das Gewicht) an Anteil von Salz in der Kühlflüssigkeit als günstig ergeben hat. Die Verwendung von ca. 3 % (bezogen auf das Gewicht) von Salz ist bei der Rezeptur des Lebensmittels in einfacher Weise zu berücksichtigen, beziehungsweise führt noch nicht zu einer unmerklichen Veränderung (salziger Geschmack) des Lebensmittels.

Im Gegensatz zu dem Stand der Technik in der internationalen Patentanmeldung WO 99/21429 wird hier ein verhältnismäßig geringer Anteil an Kochsalz vorgeschlagen. Der Einsatz von Kochsalz als Kältemischung, zum Beispiel zum Auftauen von Straßen, ist hinlänglich bekannt, jedoch erstarrt auch eine Salzsole, je nach Salzkonstellation, bei ca. -15° C bis -22° C. Für eine verfahrensmäßig schnelle, insbesondere oberflächige Abkühlung ist es günstig, wenn ein Medium zur Verfügung gestellt wird, das auch bei tieferen Temperaturen noch flüssig ist. Aus diesem Grund wird hier der Einsatz von Alkohol erfindungsgemäß vorgeschlagen, weil dieser bei deutlich niedrigeren Temperaturen flüssig bleibt. Dabei reicht die Salzkonzentration aus, den genußvollen Konsum von Alkohol sicher zu unterbinden.

Bevorzugt weist die Kühlflüssigkeit zwischen 50 % und 90 %, günstigerweise ca. 70 % Alkohol (bezogen auf das Gesamtgewicht) auf. Durch die Höhe der Alkoholkonzentration ist der Gefrierpunkt der Kühlflüssigkeit und somit auch der Bereich innerhalb dessen das Lebensmittel abgekühlt werden kann einstellbar. Gleichzeitig ist darauf zu achten, daß bei der hohen Konzentration von Alkohol natürlich auch das Explosionsrisiko steigt, weswegen es sich ergibt, daß der Kühlflüssigkeit destilliertes Wasser beigemischt wird, um das Explosionsrisiko abzusenken. Dabei ist es günstig, daß sich das Salz, insbesondere Kochsalz, in Wasser besser löst als in Alkohol.

Es ist gefunden worden, daß günstige Ergebnisse erreicht werden, wenn die Kühlflüssigkeit eine Temperatur von - 40°C bis - 10°C, bevorzugt von - 30°C bis - 20°C aufweist. Die Mischung der Kühlflüssigkeit wird daher so gewählt, daß das gewünschte Temperaturintervall zur Verfügung gestellt wird, wobei natürlich die Kühlflüssigkeit in diesem Temperaturbereich noch flüssig ist. Ergibt es sich, daß die eingesetzte Alkoholkonzentration einen Gefrierpunkt aufweist, der deutlich unter dem gewünschten Arbeitstemperaturintervall liegt, so kann die Konzentration von Alkohol entsprechend abgesenkt und die Konzentration von Wasser beziehungsweise destilliertem Wasser entsprechend erhöht werden. Durch den erfindungsgemäßen Einsatz beziehungsweise die Verwendung von Alkohol und der entsprechenden Auswahl der Konzentration wird erreicht, daß eine im Wesentlichen flüssige Kühlflüssigkeit auch bei einem tiefen Arbeitstemperaturintervall zur Verfügung steht. Gleichzeitig ist sichergestellt, daß die Alkoholkonzentration nicht zu hoch ist beziehungsweise ausreichend gering ist, so daß keine Explosionsgefahr des brennbaren Alkohols besteht.

Zur Geschmacksverbesserung des Lebensmittels kann der Kühlflüssigkeit ein Aromastoff, zum Beispiel Kirschwasser oder Bordeaux-Wein, zugesetzt werden. Der Alkoholgehalt dieser Aromastoffe verdunstet während der Bearbeitung des Lebensmittels, so daß nur noch die Aromastoffe in dem Lebensmittel verbleiben. Es ist aber auch möglich ätherische Öle, Rauchessenzen oder sonstige Aromastoffe, ob alkoholisch oder wasserlöslich, einzusetzen.

Die Erfindung bezieht sich nicht nur auf die Verwendung von Alkohol als Kühlflüssigkeit, sondern beansprucht in gleicher Weise auch eine Kühlflüssigkeit als Stoff mit der entsprechenden Rezeptur. Diese Kühlflüssigkeit kann dabei eine Rezeptur (Zusammensetzung) aufweisen, wie Sie im Zusammenhang mit der Verwendung von Alkohol hier beschrieben worden ist.

Des Weiteren bezieht sich die Erfindung auch auf ein Verfahren zum Aufschneiden von Lebensmitteln wie Wurst- oder Käseriegel, welche insbesondere auf einer Auflage aufliegen und von einem Schneidmesser aufgeschnitten werden. Dabei können ein oder mehrere Lebensmittel gleichzeitig von dem Schneidmesser aufgeschnitten werden. Durch den Einsatz der ebenfalls erfindungsgemäß vorgeschlagenen Kühlflüssigkeit beziehungsweise der Verwendung von Alkohol gemäß der Erfindung wird erreicht, daß der Lebensmittelriegel zumindest oberflächig angefroren wird und so ein sonst beobachtetes Ausfransen gerade der Randbereiche der Lebensmittel sicher und zuverlässig vermieden wird. Dabei kombiniert das erfindungsgemäße Verfahren diverse Vorzüge. Die Rezeptur der Kühlflüssigkeit ist so gewählt, daß die desinfizierende Wirkung des Alkohols ausgenützt wird. Der Einsatz von anorganischen Salzen, insbesondere Kochsalz, erreicht zum einen einen zuverlässigen Konsumschutz des Alkohols und kann zum anderen bei der Rezeptur des Lebensmittelriegels problemlos geschmacklich berücksichtigt werden. Dabei sind beide Stoffe (in entsprechenden Konzentrationen natürlich) im Nahrungsmittel verwendbar. Durch den Einsatz dieses Kühlprozesses als dem Aufschneideprozeß vorgeschalteten Verfahrensschritt wird sicher und zuverlässig erreicht, daß die aufgetrennten Scheiben im Randbereich nicht Ausfransen oder Ausschuß entsteht. Die erfindungsgemäß vorgeschlagene Verwendung beziehungsweise die Kühlflüssigkeit ist dabei auch kostengünstig, da bei dieser Rezeptur die sonst üblichen Brantweinsteuern nicht anzusetzen sind. Daraus ergibt sich ein entsprechender Kostenvorteil bei der Verwendung dieser Kühlflüssigkeit beziehungsweise bei dem Betrieb des verschiedenen, hier beschriebenen Verfahren.

Gleichzeitig wird durch das erfindungsgemäße Verfahren ein verhältnismäßig schnell ablaufender Abkühlprozeß vorgeschlagen, da das Abkühlen um so schneller erfolgen kann, je kälter die Kühlflüssigkeit ist.

Durch die erfindungsgemäße Lösung wird dabei nicht nur die Ausschußquote in den erfindungsgemäßen Schneidverfahren reduziert, es wird auch gleichzeitig eine Beschleunigung des gesamten Prozesses erreicht. Diese Vorteile gehen simultan einher und ergeben sich als Synergieeffekt der eingesetzten Maßnahmen.

In einer bevorzugten Ausgestaltung des erfindungsgemäßen Verfahrens wird vorgeschlagen, daß die Kühlflüssigkeit im Wesentlichen flüssig ist. Der eingesetzte Alkohol weist entsprechend seiner Konzentration (gegenüber destillierten Wasser) einen Gefrierpunkt von bis zu -60° C (bei ca. 75% Ethanolkonzentration) auf. Ist die Kühlflüssigkeit flüssig, so umgibt diese das zu kühlende Gut, den Lebensmittelriegel, beim Eintauchprozeß sehr schnell. Gleichzeitig erlaubt die homogene Flüssigkeit eine verhältnismäßig schnelle Verteilung der dem Lebensmittelriegel entnommenen Wärmeenergie in der Kühlflüssigkeit. Dahingegen ist gerade bei Schlammeisanwendungen beobachtet worden, daß bei den unterschiedlichen Phasen (flüssig und fest) zwar eine höhere Wärmeenergie entzogen werden kann, da die Auftauwärme beim Phasenübergang des Eises ausgenutzt werden kann, aber der Wärmetransport in dem Eis-Wasser-Gemisch schlechter ist. Gleichzeitig taucht ein abzukühlender Körper in eine mit Eisstücken versetzte Flüssigkeit schlechter ein, da die Viskosität dieser Flüssigkeit deutlich höher ist als in der erfindungsgemäßen Kühlflüssigkeit. Auch behindert dies ein schnelles Abkühlen, insbesondere des Randbereiches.

Die Erfindung umfaßt ebenfalls ein Verfahren zum Aufschneiden und Verpacken von Lebensmitteln. Erfindungsgemäß wird hierbei vorgeschlagen, daß den vorbeschriebenen Verfahrensschritten zum Aufschneiden der Lebensmittel, die im Wesentlichen dadurch gekennzeichnet sind, daß das Lebensmittel in die erfindungsgemäße Kühlflüssigkeit getaucht wird und dann aufgeschnitten wird, ein Verpackungsschritt nachfolgt, bei welchem hernach das Lebensmittel in einer Verpackstation verpackt wird. Üblicherweise werden aufgeschnittene Lebensmittelgüter zum Beispiel in Tiefzieh-Vakuumverpackungsmaschinen oder dergleichen verpackt. Sie werden hierbei mit Kunststoffolie eingeschlagen, dann wird die Verpackung entweder evakuiert oder unter eine Schutzgasatmosphäre gesetzt und dann wird die Verpackung verschweißt beziehungsweise geschlossen. Aufgrund der desinfizierenden Wirkung des eingesetzten Alkohols wurde allerdings jetzt eine erhebliche Verlängerung der Haltbarkeitszeit von solchen, nach dem erfindungsgemäßen Verfahren hergestellten Verpackungen beobachtet. Im Einzelfall wurde beobachtet, daß die Haltbarkeit um bis zu 12 Tage verlängert wird. Zurückzuführen ist dies auf die desinfizierende Wirkung des Alkohol, der dazu führt, daß die Keimanzahl in dem Lebensmittel drastisch reduziert wird. Ist aber die anfängliche, beim Verpacken bestehende Keimzahl deutlich reduziert, so wird das Lebensmittel erst später unbrauchbar, da erst nach längerer Zeit wieder eine entsprechende kritische Keimanzahl in dem verpackten Gut entstanden ist. Dabei ist es auch günstig, daß ein Teil des Alkohols anfänglich in den Randbereich des Lebensmittelriegels eindringt und dann, während des Verpackens oder hernach in der Verpackung, wieder verdunstet und so das Vakuum beziehungsweise die Schutzgasatmosphäre beeinflußt.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Verwendung von gekühlten Alkohol, insbesondere von Branntwein beziehungsweise Ethanol, Alkane, Essigsäureester, insbesondere Butylacetat, Ethylacetat oder Aceton, beziehungsweise eine Mischung hiervon, gemischt mit einem Salz der Alkalimetalle, Berylliumgruppe oder Erdalkalimetalle, insbesondere Kochsalz als Kühlflüssigkeit zum Gefrieren oder oberflächigen Gefrieren von Lebensmitteln wie Wurst- oder Käseriegeln.

2. Kühlflüssigkeit, insbesondere zum Gefrieren oder oberflächigen Gefrieren von Lebensmitteln, wie Wurst- oder Käseriegeln, wobei die Kühlflüssigkeit Alkohol, insbesondere Branntwein oder Ethanol, Alkane, Essigsäureester, insbesondere Butylacetat, Ethylacetat oder Aceton aufweist, beziehungsweise eine Mischung hiervon, **dadurch gekennzeichnet, daß** der Kühlflüssigkeit ein Salz der Alkalimetalle, Berylliumgruppe oder Erdalkalimetalle, insbesondere Kochsalz zugesetzt ist.

3. Verwendung von Alkohol nach Anspruch 1 beziehungsweise Kühlfüssigkeit nach Anspruch 2 , **dadurch gekennzeichnet, daß** der Kühlflüssigkeit destilliertes Wasser beigemischt ist.

4. Verwendung von Alkohol beziehungsweise Kühlflüssigkeit, jeweils nach einem oder beiden der vorhergehenden Ansprüche, **dadurch gekennzeichnet, daß** die Kühlflüssigkeit zwischen 50 % und 90 %, bevorzugt ca. 70 % Alkohol (bezogen auf das Gewicht) aufweist.

5. Verwendung von Alkohol beziehungsweise Kühlflüssigkeit, jeweils nach einem oder mehreren der vorhergehenden Ansprüche, **dadurch gekennzeichnet, daß** der Kühlflüssigkeit zwischen 0,5 % und 10,0 %, bevorzugt 3,0 % Salz, insbesondere Kochsalz (bezogen auf das Gewicht) beigemischt ist.

6. Verwendung von Alkohol beziehungsweise Kühlflüssigkeit, jeweils nach einem oder mehreren der vorhergehenden Ansprüche, **dadurch gekennzeichnet, daß** die Kühlflüssigkeit eine Temperatur von - 40°C bis - 10°C, bevorzugt von -30°C bis - 20°C aufweist.

7. Verwendung von Alkohol beziehungsweise Kühlflüssigkeit, jeweils nach einem oder mehreren der vorhergehenden Ansprüche, **dadurch gekennzeichnet, daß** der Kühlflüssigkeit ein Aromastoff zugesetzt ist.

8. Verwendung von Alkohol beziehungsweise Kühlflüssigkeit, jeweils nach einem oder mehreren der vorhergehenden Ansprüche, **dadurch gekennzeichnet, daß** der Kühlflüssigkeit ein Aromastoff in Form eines alkoholischen Getränkes, wie zum Beispiel Kirschwasser, Bordeaux-Wein und so weiter oder in Form eine ätherischen Stoffes zugesetzt ist.

9. Verfahren zum Aufschneiden von Lebensmitteln, wie Wurst- oder Käseriegeln, welcher von einem Schneidmesser aufgeschnitten wird und das Lebensmittel vor dem Aufschneiden gekühlt wird, indem es in eine Kühlflüssigkeit nach einem oder mehreren der vorhergehenden Ansprüche eingetaucht wird und oberflächig angefroren wird.

10. Verfahren nach Anspruch 9, **dadurch gekennzeichnet, daß** die Kühlflüssigkeit im Wesentlichen flüssig ist.

11. Verfahren zum Aufschneiden und Verpacken von Lebensmitteln wobei den Verfahrensschritten nach einem oder beiden der Ansprüche 9 und 10 ein Verpackungsschritt folgt, bei welchem das aufgeschnittene Lebensmittelgut in Kunststoffolien unter Vakuum oder Schutzatmosphäre verpackt wird.
